(19) Europäisches Patentamt
European Patent Office
Office européen des brevets

(11) EP 3 115 346 A1

(12) **EUROPEAN PATENT APPLICATION**
published in accordance with Art. 153(4) EPC

(43) Date of publication:
**11.01.2017 Bulletin 2017/02**

(21) Application number: **15757918.6**

(22) Date of filing: **16.02.2015**

(51) Int Cl.:
***C04B 24/24*** *(2006.01)*

(86) International application number:
**PCT/KR2015/001525**

(87) International publication number:
**WO 2015/133750 (11.09.2015 Gazette 2015/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.03.2014 KR 20140026461**

(71) Applicant: **San Nopco Korea Ltd.**
**Pyeongtaek-si, Gyeonggi-do 451-852 (KR)**

(72) Inventors:
- **KWEON, Oil**
**Osan-si, Gyeonggi-do 447-710 (KR)**
- **JEON, Jaeik**
**Seoul 142-878 (KR)**
- **YU, Chanyong**
**Busan 611-801 (KR)**
- **KIM, Kyeong Hwan**
**Osan-si, Gyeonggi-do 447-710 (KR)**
- **JEON, Youngju**
**Suwon-si, Gyeonggi-do 442-764 (KR)**

(74) Representative: **Pfenning, Meinig & Partner mbB**
**Patent- und Rechtsanwälte**
**Theresienhöhe 11a**
**80339 München (DE)**

# (54) CEMENT DISPERSANT, METHOD FOR PREPARING SAME, AND MORTAR·CONCRETE ADMIXTURE USING SAME

(57) The present invention relates to a polycarbonic acid-based cement dispersant, a method for preparing the same, and a mortar·concrete admixture using the polycarbonic acid-based cement dispersant.

The cement dispersant of the present invention and the mortar·concrete admixture using the cement dispersant are applied to a cement composition such as a cement paste, mortar, concrete, etc., enhance a dispersion and retention force between cement molecules, have excellent fluidity due to the suppression of slump loss, and have an effect of improving workability, such as shortening a concrete mixing time by 20% or more. Further, the mortar·concrete admixture using the cement dispersant of the present invention has an effect of providing a very good concrete condition and an appropriate compressive strength over time.



Printed by Jouve, 75001 PARIS (FR)

## Description

[Technical Field]

The present invention relates to a cement dispersant, a method for preparing the same, and a mortar·concrete admixture using the cement dispersant, and more particularly, to a polycarbonic acid-based cement dispersant, a method for preparing the same, and a mortar·concrete admixture using the polycarbonic acid-based cement dispersant.

[Background Art]

A cement composition has been widely used for structures and outer walls of buildings since the cement composition provides cement-cured products having excellent strength and durability. Examples of the cement composition includes a cement paste prepared by adding water to cement, mortar prepared by mixing water and a fine aggregate (i.e., sand) with cement, and concrete prepared by mixing water, a fine aggregate (i.e., sand) and a coarse aggregate (i.e., gravel) with cement. In this case, cement dispersants and admixture materials have been generally used to improve work efficiency, strength, durability, etc. of the cement composition.

The cement dispersants are additives that reduce an attraction between cement particles and water particles when cement is kneaded with water, and thus enhance fluidity and have an influence on a hydration reaction, and the mortar·concrete admixture materials are optionally used to improve or enhance properties of mortar and concrete when mortar and concrete are mixed, and are divided into an admixture and an admixing agent.

In the admixture material, the admixture is used in a relatively large amount (generally 5% of the weight of cement), and thus a volume of the admixture itself is reflected in a mix design for mortar and concrete. In this case, the admixture includes fly ash, blast furnace slag, silica fume, etc.

In the admixture material, the admixing agent is used in a relatively small amount (generally 1% or less of the weight of cement), and thus a volume of the admixing agent itself is ignored in the mix design for mortar and concrete, and the admixing agent is used to improve properties of mortar and concrete through a physicochemical reaction. Main examples of the admixing agent include a dispersant (a water reducer), an air-entraining (AE) agent, an AE water reducer, superplasticizer, shrinkage reducer, an accelerator/retarder, an anti-rust additive, etc.

In general, when types of concrete are divided according to the strength thereof, the types of concrete may be divided into low-strength concrete (20 MPa or less), mean-strength concrete (20 to 40 MPa), high-strength concrete (40 MPa or more), and ultra-high-strength concrete (90 MPa or more). In recent years, with the improvement of desired physical properties of the high-strength or ultra-high-strength concrete, the admixture used in the concrete is inevitably applied in order to apply the concrete to high-rise buildings. Also, there is research actively conducted in various fields to develop high-strength cement, a high-performance admixture, etc.

The admixture used in the high-strength concrete includes a lignin admixture, a polynaphthalene sulfonate-based admixture, a polycarbonic acid-based admixture, etc. Among these, the polycarbonic acid-based admixture has been increasingly used.

Especially, among the above-described concrete admixtures, the polycarbonic acid-based admixture, the polycarbonic acid-based admixture has superior dispersibility, compared to the other admixtures. As such admixtures, the admixtures disclosed in Korean Registered Patent Nos. 10-0924665 and 10-0760586 include two copolymers as an essential ingredient, and are known to exhibit an excellent water-reducing property, fluidity and slump maintenance performance of a cement composition.

Also, the concrete admixture disclosed in Korean Registered Patent No. 10-0855533 is known to exhibit excellent workability of a cement composition due to its characteristics such as a decrease in viscosity of concrete, an improvement of slump maintainability, and bleeding inhibition in the cement composition. However, since problems regarding a decrease in fluidity over time and slump loss are not completely solved, these problems remain to be solved.

Therefore, to solved the above problems in the present invention, the present inventors have eventually invented a polycarbonic acid-based cement dispersant having a novel structure, a method for preparing the same, and a mortar·concrete admixture using the polycarbonic acid-based cement dispersant.

[Disclosure]

[Technical Problem]

Therefore, the present invention is designed to solve the problems of the prior art, and it is an object of the present invention to provide a polycarbonic acid-based cement dispersant capable of enhancing a dispersion and retention force between cement molecules, improving slump maintenance performance and shortening a concrete mixing time, a method for preparing the same, and a mortar·concrete admixture using the polycarbonic acid-based cement

dispersant.

[Technical Solution]

In accordance with one aspect of the present invention, a cement dispersant is a polymer composition represented by Formula (f), wherein the polymer composition comprises a copolymer including a compound represented by Formula (a) and a compound represented by at least one of Formulas (d) and (e), and the compound of Formula (a) is formed by a ring-opening reaction of an acid anhydride represented by Formula (c) with a metharyl (poly)alkylene glycol ether compound represented by Formula (b), and is able to be used alone or in combination with the compound of Formula (b):

Formula (a)

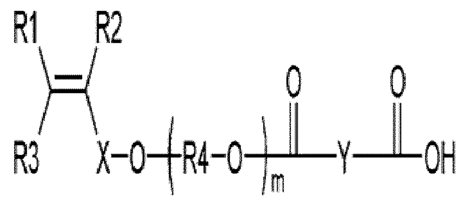

wherein each of R1 to R3 represents a hydrogen atom, or at least one alkyl group having 1 to 30 carbon atoms, R4 represents an alkyl group having 1 to 30 carbon atoms, X represents an alkyl group having 0 to 30 carbon atoms, Y represents an alkyl group having 1 to 30 carbon atoms, and m represents the average number of moles of added oxyalkylene and alkyl groups and is a number ranging from 1 to 400;

Formula (b)

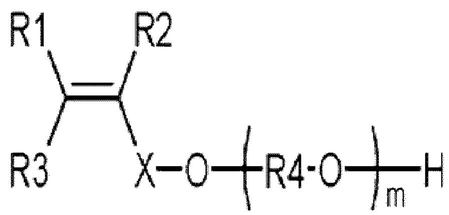

wherein each of R1 to R3 represents a hydrogen atom, or at least one alkyl group having 1 to 30 carbon atoms, R4 represents an alkyl group having 1 to 30 carbon atoms, X represents an alkyl group having 0 to 30 carbon atoms, and m represents the average number of moles of added oxyalkylene and alkyl groups and is a number ranging from 1 to 400;

Formula (c)

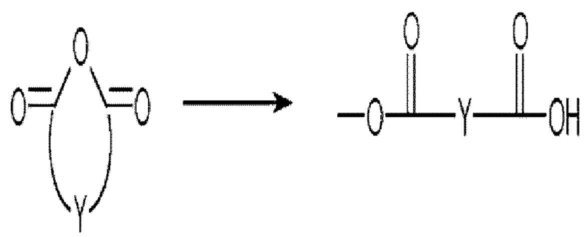

wherein Y represents a material, such as an alkene, a phenyl, an alkyl, an aryl, an aliphatic cyclic compound, or an aromatic compound, which has 1 to 30 carbon atoms;

Formula (d)

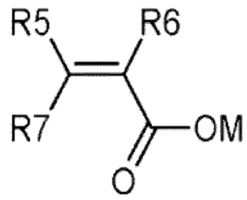

wherein each of R5 to R7 represents a hydrogen atom, or an alkyl, alkylene, allyl or acid, all of which have 1 to 30 carbon atoms, and M represents a hydrogen atom, or a compound such as a monovalent or divalent metal and ammonia, and a primary, secondary or tertiary amine;

Formula (e)

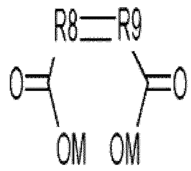

wherein each of R8 to R9 represents an alkyl group having 1 to 30 carbon atoms, and M represents a hydrogen atom, or a compound such as a monovalent or divalent metal and ammonia, and a primary, secondary or tertiary amine; and

Formula (f)

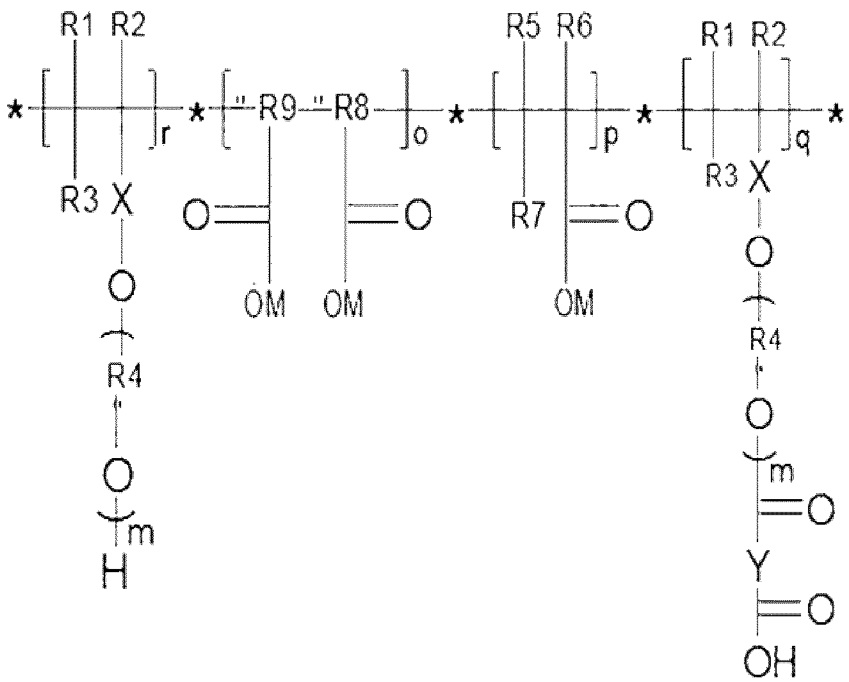

wherein each of R1 to R3 and R5 to R7 represents a hydrogen atom, or an alkyl group having 1 to 30 carbon atoms, each of R4 and R8 to R9 represents an alkyl group having 1 to 30 carbon atoms, X represents an alkyl group having 0 to 30 carbon atoms, each of m, o, p, q and r represents the average number of moles, provided that m is in a range of 1 to 400 moles, o, p and r are in a range of 0 to 400 moles, and q is in a range of 0.1 to 400 moles, and M represents a hydrogen atom, a compound such as a monovalent or divalent metal and ammonia, and a primary, secondary or

tertiary amine.

The average number of moles of the oxyalkylene and alkyl groups in the compound of Formula (a) may be in a range of 1 to 400.

The polymer composition represented by Formula (f) may have a weight average molecular weight of 10,000 to 300,000.

The mixing ratios of the compounds of Formulas (a), (b), (d) and (e) may be based on the molar ratios, the sum of the molar ratios of the compounds of Formulas (a) and (b) is less than or equal to the sum of the molar ratios of the compounds of Formulas (d) and (e), the polymer composition of Formula (f) essentially comprises the compound of Formula (a), and is able to be used in combination with the compound of Formula (b), at least one of the compounds of Formulas (d) and (e) is able to be used, and at least one of the compounds of Formulas (d) and (e) has to be used.

The compounds of Formulas (a), (b), (d), and (e) may be polymerized at a molar ratio of 10 to 100 : 0 to 70 : 0 to 150 : 0 to 150.

In accordance with another aspect of the present invention, a mortar·concrete admixture comprises the cement dispersant represented by Formula (f).

In accordance with another aspect of the present invention, a method for preparing a cement dispersant which is a polymer composition represented by Formula (f), wherein the polymer composition comprises a copolymer including a compound represented by Formula (a) and a compound represented by at least one of Formulas (d) and (e), and the compound of Formula (a) is formed by a ring-opening reaction of an acid anhydride represented by Formula (c) with a metharyl (poly)alkylene glycol ether compound represented by Formula (b), and is able to be used alone or in combination with the compound of Formula (b):

Formula (a)

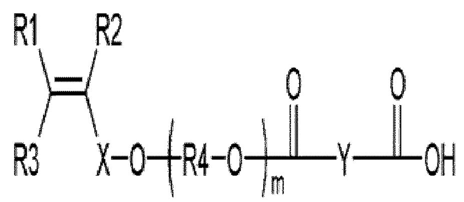

wherein each of R1 to R3 represents a hydrogen atom, or at least one alkyl group having 1 to 30 carbon atoms, R4 represents an alkyl group having 1 to 30 carbon atoms, X represents an alkyl group having 0 to 30 carbon atoms, Y represents an alkyl group having 1 to 30 carbon atoms, and m represents the average number of moles of added oxyalkylene and alkyl groups and is a number ranging from 1 to 400;

Formula (b)

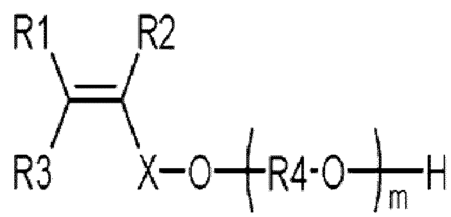

wherein each of R1 to R3 represents a hydrogen atom, or at least one alkyl group having 1 to 30 carbon atoms, R4 represents an alkyl group having 1 to 30 carbon atoms, X represents an alkyl group having 0 to 30 carbon atoms, and m represents the average number of moles of added oxyalkylene and alkyl groups and is a number ranging from 1 to 400;

Formula (c)

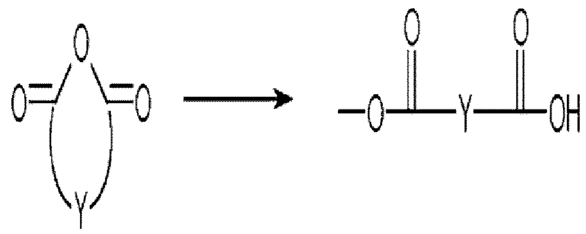

wherein Y represents a material, such as an alkene, a phenyl, an alkyl, an aryl, an aliphatic cyclic compound, or an aromatic compound, which has 1 to 30 carbon atoms;

Formula (d)

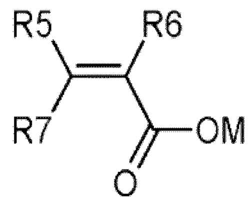

wherein each of R5 to R7 represents a hydrogen atom, or an alkyl, alkylene, allyl or acid, all of which have 1 to 30 carbon atoms, and M represents a hydrogen atom, or a compound such as a monovalent or divalent metal and ammonia, and a primary, secondary or tertiary amine;

Formula (e)

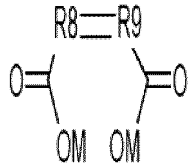

wherein each of R8 to R9 represents an alkyl group having 1 to 30 carbon atoms, and M represents a hydrogen atom, or a compound such as a monovalent or divalent metal and ammonia, and a primary, secondary or tertiary amine; and

Formula (f)

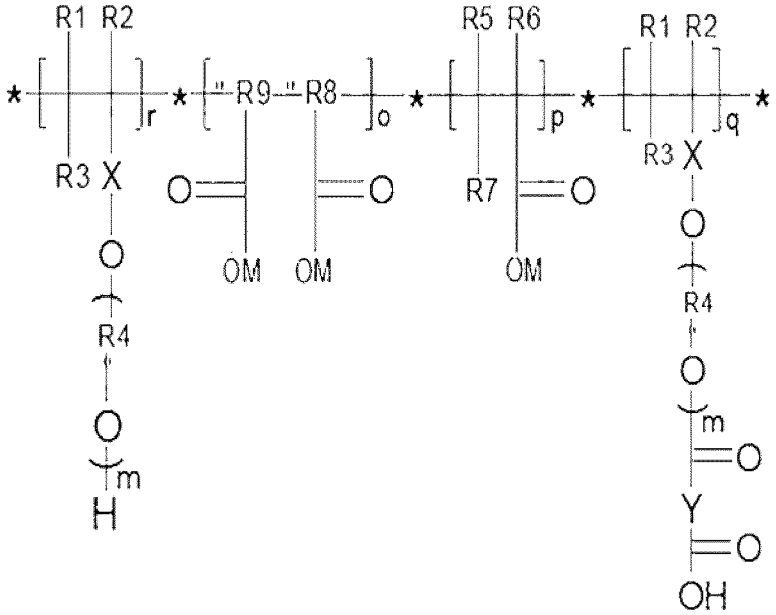

wherein each of R1 to R3 and R5 to R7 represents a hydrogen atom, or an alkyl group having 1 to 30 carbon atoms, each of R4 and R8 to R9 represents an alkyl group having 1 to 30 carbon atoms, X represents an alkyl group having 0 to 30 carbon atoms, each of m, o, p, q and r represents the average number of moles, provided that m is in a range of 1 to 400 moles, o, p and r are in a range of 0 to 400 moles, and q is in a range of 0.1 to 400 moles, and M represents a hydrogen atom, a compound such as a monovalent or divalent metal and ammonia, and a primary, secondary or tertiary amine.

The average number of moles of the oxyalkylene and alkyl groups in the compound of Formula (a) may be in a range of 1 to 400.

The polymer composition represented by Formula (f) may have a weight average molecular weight of 10,000 to 300,000.

The mixing ratios of the compounds of Formulas (a), (b), (d) and (e) may be based on the molar ratios, the sum of the molar ratios of the compounds of Formulas (a) and (b) is less than or equal to the sum of the molar ratios of the compounds of Formulas (d) and (e), the polymer composition of Formula (f) essentially comprises the compound of Formula (a), and is able to be used in combination with the compound of Formula (b), at least one of the compounds of Formulas (d) and (e) is able to be used, and at least one of the compounds of Formulas (d) and (e) has to be used.

The compounds of Formulas (a), (b), (d), and (e) may be polymerized at a molar ratio of 10 to 100 : 0 to 70 : 0 to 150 : 0 to 150.

[Advantageous Effects]

The cement dispersant of the present invention and the mortar·concrete admixture using the cement dispersant are applied to a cement composition such as a cement paste, mortar, concrete, etc., enhance a dispersion and retention force between cement molecules, have excellent fluidity due to the suppression of slump loss, and have an effect of improving workability, such as shortening a concrete mixing time by 20% or more.

Further, the mortar·concrete admixture using the cement dispersant of the present invention has an effect of providing a very good concrete condition and an appropriate compressive strength over time.

[Best Mode]

The cement dispersant of the present invention includes a polymer composition represented by Formula (f). Here, the polymer composition includes a compound represented by Formula (a) and a copolymer including a compound represented by at least one of Formulas (d) and (e), and the compound of Formula (a) is formed by a ring-opening reaction of an acid anhydride represented by Formula (c) with a metharyl (poly)alkylene glycol ether compound represented by Formula (b), and is able to be used alone or in combination with the compound of Formula (b).

<Formula (a)>

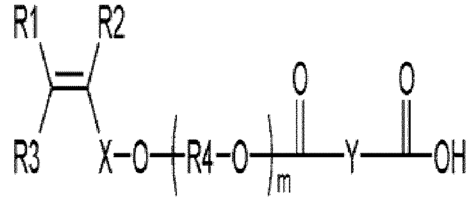

In Formula (a), each of R1 to R3 represents a hydrogen atom, or at least one alkyl group having 1 to 30 carbon atoms, R4 represents an alkyl group having 1 to 30 carbon atoms, X represents an alkyl group having 0 to 30 carbon atoms, Y represents an alkyl group having 1 to 30 carbon atoms, and m represents the average number of moles of added oxyalkylene and alkyl groups and is a number ranging from 1 to 400.

The compound of Formula (a) has a structure as described above, and enhances maintenance performance and shortens a mixing time under the influence of the residue Y and an acid group present at the terminus thereof when a reaction is finally carried out with the same structure as in the polymer composition of Formula (f).

The compound of Formula (a) is synthesized through the ring-opening reaction of the acid anhydride of Formula (c) with the compound of Formula (b), and the adjustment of the synthesis is determined, depending on an acid catalyst and the number of moles of a reacting group. In this case, the acid catalyst that may be used may include methane sulfonic acid, p-toluene sulfonic acid, hydrochloric acid, sulfuric acid, etc. Also, the reaction may be carried out at a reaction temperature of 50 to 200°C for a reaction time of 0.5 to 150 hours, particularly preferably at a reaction temperature of 70 to 130°C for a reaction time of 0.5 to 80 hours. To check a course of the reaction, an acid value is measured to calculate a reaction rate as follows. Next, a time when the reaction rate reaches 99% or more is defined as a point of time when the reaction is completed.

$$\text{Reaction rate (\%)} = \frac{\text{Initial acid value} - \text{Measured acid value}}{\text{Initial acid value} - \text{Acid value after 100\% reaction}} \times 100$$

Also, when m representing the oxyalkylene group and the alkyl group in Formula (a) is greater than or equal to 400, a side chain grows too long during synthesis, which makes it difficult to perform the synthesis due to a high viscosity. Also, the performance of the polymer composition of Formula (f) having a final structure may be degraded. Therefore, m is preferably in a range of 1 to 400.

<Formula (b)>

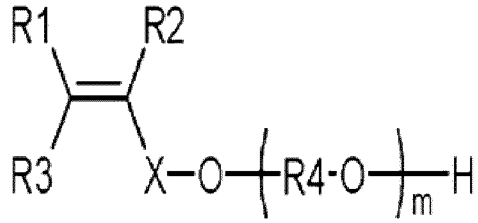

In Formula (b), each of R1 to R3 represents an hydrogen atom, or at least one alkyl group having 1 to 30 carbon atoms, R4 represents an alkyl group having 1 to 30 carbon atoms, X represents an alkyl group having 0 to 30 carbon atoms, and m represents the average number of moles of added oxyalkylene and alkyl groups and is a number ranging from 1 to 400.

As the material used to prepare the compound of Formula (a), the molecular weight of the compound of Formula (b) may be adjusted using the average number of moles represented by m, and the side chain may have an acid group through a reaction of the acid anhydride as an additive of the ring-opening reaction shown in Formula (c). Also, when the polymer composition of Formula (f) is prepared, the compound of Formula (b) may be used in combination with the compound of Formula (a). When the compound of Formula (b) is used in combination with the compound of Formula (a), the concrete admixture has excellent performance, compared to when the compound of Formula (b) is used alone.

<Formula (c)>

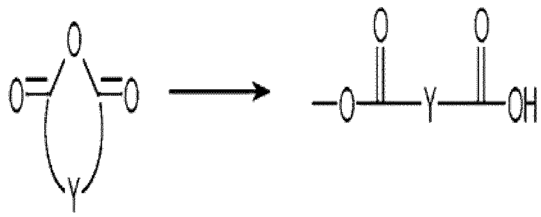

In Formula (c), Y represents a material, such as an alkene, a phenyl, an alkyl, an aryl, an aliphatic cyclic compound, or an aromatic compound, which has 1 to 30 carbon atoms.

Y represents a maleic acid anhydride, a succinic acid anhydride, a 1,8-naphthalic acid anhydride, a 4-methylphthalic acid anhydride, a phthalic acid anhydride, a (2-dodecen-1-yl)succinic acid anhydride, an isatoic acid anhydride, an itaconic acid anhydride, a trans-1,2-cyclohexanedicarboxylic acid anhydride, a 2,3-dimethylmaleic acid anhydride, a homophthalic acid anhydride, a hexahydro-4-methylphthalic acid anhydride, a 3,3-tetramethyleneglutaric acid anhydride, a phenylsuccinic acid anhydride, a methylsuccinic acid anhydride, a 2,2-dimethylglutaric acid anhydride, a 3,4-pyridinedicarboxylic acid anhydride, a bromomaleic acid anhydride, a 4-methylphthalic acid anhydride, a 2-octen-1-ylsuccinic acid anhydride, an N-methylisatoic acid anhydride, a 4-amino-1,8-naphthalic acid anhydride, a 4-bromo-1,8-naphthalic acid anhydride, a 4-amino-1,8-naphthalic acid anhydride, a tetrachlorophthalic acid anhydride, a 3-hydroxyphthalic acid anhydride, a 2,3-dichloromaleic acid anhydride, a 5-bromoisatoic acid anhydride, a 3,6-dichlorophthalic acid anhydride, etc.

The acid anhydride of Formula (c) is applied to a binding reaction with unsaturated poly(oxy alkylene) ether through a ring-opening reaction, and may be applied to the present invention when the end group is replaced with the acid group.

<Formula (d)>

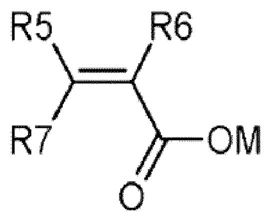

In Formula (d), each of R5 to R7 represents an alkyl, alkylene, allyl or acid, all of which have 1 to 30 carbon atoms, and M represents a hydrogen atom, or a compound such as a monovalent or divalent metal and ammonia, and a primary, secondary or tertiary amine.

<Formula (e)>

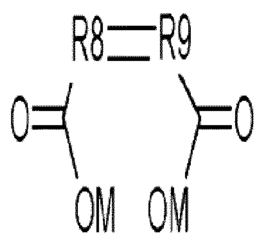

In Formula (e), each of R8 to R9 represents an alkyl group having 1 to 30 carbon atoms, and M represents a hydrogen atom, or a compound such as a monovalent or divalent metal and ammonia, and a primary, secondary or tertiary amine.

The compounds of Formulas (d) and (e) constituting the polymer composition of Formula (f) may be used alone or in combination. Upon polymerization, the molecular weights of the compounds of Formulas (d) and (e) may be adjusted

by adjusting a degree of polymerization according to the average molar ratio. Also, the reaction may be carried out at 20 to 200°C for 0.5 to 150 hours, preferably carried out at 50 to 130°C for 0.5 to 80 hours. Further, the average molecular weight of these compounds used in the polymerization reaction may be adjusted using a polymerization regulator.

<Formula (f)>

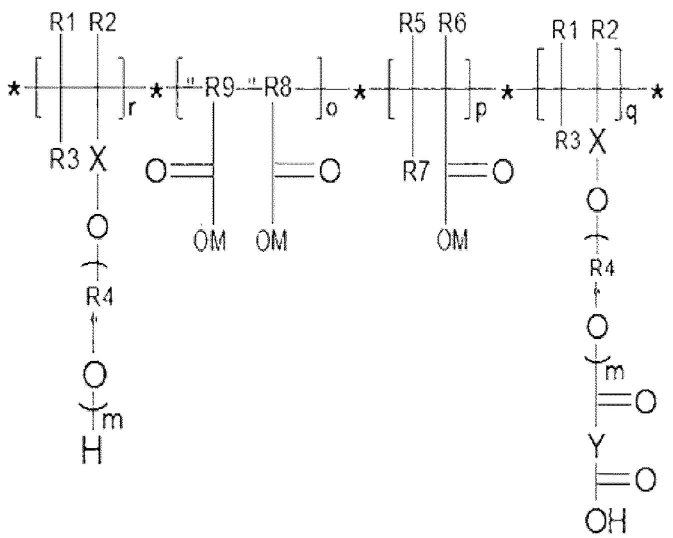

In Formula (f), each of R1 to R3 and R5 to R7 represents a hydrogen atom, or an alkyl group having 1 to 30 carbon atoms, each of R4 and R8 to R9 represents an alkyl group having 1 to 30 carbon atoms, X represents an alkyl group having 0 to 30 carbon atoms, each of m, o, p, q and r represents the average number of moles, provided that m is in a range of 1 to 400 moles, o, p and r are in a range of 0 to 400 moles, and q is in a range of 0.1 to 400 moles, and M represents a hydrogen atom, a compound such as a monovalent or divalent metal and ammonia, and a primary, secondary or tertiary amine.

The structure includes one or three or more high-molecular-weight polymers, and is formed by a chemical reaction of the compounds of Formulas (a), (b), (d), and (e). The mixing ratios of the compounds of the formulas are based on the molar ratios thereof, the sum of the molar ratios of the compounds of Formulas (a) and (b) is less than or equal to the sum of the molar ratios of the compounds of Formulas (d) and (e), the polymer composition of Formula (f) essentially includes the compound of Formula (a), and may be used in combination with the compound of Formula (b), at least one of the compounds of Formulas (d) and (e) may be used, and at least one of the compounds of Formulas (d) and (e) has to be included.

Also, the polymerization is controlled using the ratio of the average number of moles, and the compounds of Formulas (a), (b), (d), and (e) may be polymerized at a molar ratio of 0.1 to 400 : 0 to 400 : 0 to 400 : 0 to 400. Particularly preferably, the compounds of Formulas (a), (b), (d), and (e) may be polymerized at a molar ratio of 10 to 100 : 0 to 70 : 0 to 150 : 0 to 150. Dispersion performance may be degraded when the molar ratios of the compounds of Formulas (d) and (e) are too low, whereas maintenance performance may be degraded due to a high viscosity when the molar ratios of the compounds of Formulas (d) and (e) are too high.

A polymerization product may be obtained by allowing the compounds to react at 30 to 150°C for 0.5 to 150 hours. Particularly preferably, a high-molecular-weight polymer having excellent performance may be obtained by allowing the compounds to react at 50 to 130°C for 0.5 to 80 hours. When the reaction time is too short or too long, a degree of polymerization may be lowered, resulting in degraded performance. When the temperature does not reach or exceeds a predetermined temperature during the polymerization, the polymerization may not occur or the chains may be rather cut.

A chain transfer agent and polymerization initiator may be used to polymerize components of the monomer. Any proper material may be used as the chain transfer agent. Specifically, a thiol-based chain transfer agent such as thioglycerol, mercaptoethanol, 2-mercaptopropionic acid, 3-mercaptopropionic acid, thiomalic acid, and the like may be used. A persulfate-based polymerization initiator such as ammonium persulfate, sodium persulfate, potassium persulfate, and the like, and a peroxide-based polymerization initiator such as hydrogen peroxide, benzoyl peroxide, and the like may be used as the polymerization initiator.

The polymer composition of Formula (f) prepared by the above-described method has an acidic functional group at the end group of a side chain thereof, and thus may have remarkably improved maintenance performance due

to steric repulsion or predetermined electrostatic repulsive force by the side chain through a reaction of cement with water during concrete mixing. Also, an initial mixing time may be shortened due to negative ions derived from the acidic functional group at the end of the side chain, and the maintenance performance may be improved through a de-esterification reaction after a predetermined amount of time has lapsed.

The cement dispersant thus prepared may be prepared alone into a mortar·concrete admixture, or prepared in combination with an admixing agent into a mortar·concrete admixture. Here, the admixing agent includes an AE agent/AE water reducer for improving work performance or anti-freeze-thawing performance, a superplasticizer for improving fluidity using a water-reducing effect, a shrinkage reducer for reducing shrinkage caused during drying, an accelerator/retarder for adjusting a setting/curing time, an anti-rust additive for inhibiting corrosion of reinforcing steel by chlorides, a segregation-reducing agent for preventing segregation of an aggregate from cement, a waterproof agent for enhancing a waterproof property, a foaming/ blowing agent for forming bubbles to contribute to weight-lightening, a viscosity agent for improving viscosity and coagulation, etc.

Hereinafter, the present invention will be described in detail with reference to Examples and Comparative Examples thereof.

[Preparation of Formula (a)]

<Example 1 (Preparation of SuH)>

After a thermometer, an agitator, and a reflux condenser were installed in a glass reactor, 3,120 g (EO moles: 60) of a metharyl (poly)alkylene glycol ether compound was put into the glass reactor, and heated to 60°C to vacuum-collect and completely remove moisture included in the compound. Thereafter, 62.44 g of a succinic anhydride and 15.91 g of p-toluenesulfonic acid were added thereto. When the addition was completed, the temperature was increased, and the resulting mixture was heated to a temperature of approximately 90°C. After the mixture was heated for approximately 22 hours, an acid value of the mixture was measured to be 22.723 ml/g (a reaction rate: 99.4%), and the reaction was then stopped.

<Example 2 (Preparation of PhH)>

After a thermometer, an agitator, and a reflux condenser were installed in a glass reactor, 3,120 g (EO moles: 60) of a metharyl (poly)alkylene glycol ether compound was put into the glass reactor, and heated to 60°C to vacuum-collect and completely remove moisture included in the compound. Thereafter, 173 g of a phthalic anhydride and 3 g of p-toluenesulfonic acid were added thereto. When the addition was completed, the temperature was increased, and the resulting mixture was heated to a temperature of approximately 90°C. After the mixture was heated for approximately 66 hours, an acid value of the mixture was measured to be 22.94 ml/g (a reaction rate: 99.3%), and the reaction was then stopped.

<Example 3(Preparation of Ma1H)>

After a thermometer, an agitator, and a reflux condenser were installed in a glass reactor, 3,120 g (EO moles: 60) of a metharyl (poly)alkylene glycol ether compound was put into the glass reactor, and heated to 60°C to vacuum-collect and completely remove moisture included in the compound. Thereafter, 114.73 g of a maleic anhydride and 16.2 g of p-toluenesulfonic acid were added thereto. When the addition was completed, the temperature was increased, and the resulting mixture was heated to a temperature of approximately 90°C. After the mixture was heated for approximately 3 hours, an acid value of the mixture was measured to be 23.2 ml/g (a reaction rate: 99.8%), and the reaction was then stopped.

[Preparation of polymer composition of Formula (f)]

<Example 4>

After a thermometer, an agitator, a reflux condenser, and a dropping funnel were installed in a glass reactor, 720 g of the compound prepared in Example 1 and 50 g of ion-exchange water were added thereto, and the resulting mixture was heated to 65°C. When the temperature reached a target temperature, 4.84 g of 3-mercaptopropionic acid, 64.8 g of acrylic acid, and 6.04 g of sodium persulfate were added dropwise for 3 to 3.5 hours. Thereafter, the mixture was aged for 3 hours, and the reaction was then stopped. Then, the resulting reaction mixture was cooled to 50°C or less to obtain an aqueous copolymer solution having a weight average molecular weight of 35,412.

<Example 5>

After a thermometer, an agitator, a reflux condenser, and a dropping funnel were installed in a glass reactor, 360 g of the compound prepared in Example 1, 270 g of a metharyl (poly)alkylene glycol ether compound, and 50 g of ion-exchange water were added thereto, and the resulting mixture was heated to 65°C. When the temperature reached a target temperature, 4.84 g of 3-mercaptopropionic acid, 64.8 g of acrylic acid, and 6.04 g of sodium persulfate were added dropwise for 3 to 3.5 hours. Thereafter, the mixture was aged for 3 hours, and the reaction was then stopped. Then, the resulting reaction mixture was cooled to 50°C or less to obtain an aqueous copolymer solution having a weight average molecular weight of 38,193.

<Example 6>

After a thermometer, an agitator, a reflux condenser, and a dropping funnel were installed in a glass reactor, 144 g of the compound prepared in Example 1, 432 g of a metharyl (poly)alkylene glycol ether compound, and 50 g of ion-exchange water were added thereto, and the resulting mixture was heated to 65°C. When the temperature reached a target temperature, 4.84 g of 3-mercaptopropionic acid, 64.8 g of acrylic acid, and 6.04 g of sodium persulfate were added dropwise for 3 to 3.5 hours. Thereafter, the mixture was aged for 3 hours, and the reaction was then stopped. Then, the resulting reaction mixture was cooled to 50°C or less to obtain an aqueous copolymer solution having a weight average molecular weight of 41,856.

<Comparative Example 1>

After a thermometer, an agitator, a reflux condenser, and a dropping funnel were installed in a glass reactor, 210 g of a metharyl (poly)alkylene glycol ether compound, 17.05 g of maleic acid, and 100 g of ion-exchange water were added thereto, and the resulting mixture was heated to 65°C. Thereafter, 9.8 parts by weight of hydrogen peroxide was added to a reaction vessel. Then, 9 g of acrylic acid, 0.635 g of L-ascorbic acid and 6.03 g of ion-exchange water were added dropwise for 3 hours and 3.5 hours, respectively. After the dropwise addition was completed, the reaction product was kept at 65°C for an hour. When the reaction was completed, the reaction product was adjusted with an aqueous NaOH solution to have a pH value of 7, thereby obtaining an aqueous copolymer solution.

<Comparative Example 2>

After a thermometer, an agitator, a reflux condenser, and a dropping funnel were installed in a glass reactor, 210 g of a metharyl (poly)alkylene glycol ether compound, 21.35 g of maleic acid, and 142 g of ion-exchange water were added thereto, and the resulting mixture was heated to 65°C. Thereafter, 4.39 g of an aqueous hydrogen peroxide solution was added to a reaction vessel. Then, 5.9 g of 2-hydroxyethyl acrylate, 0.284 g of L-ascorbic acid, and 5.4 g of ion-exchange water were added dropwise for 3 hours and 3.5 hours, respectively. After the dropwise addition was completed, the reaction product was kept at 65°C for an hour. When the reaction was completed, the reaction product was cooled to room temperature, and then adjusted with an aqueous NaOH solution to have a pH value of 7, thereby obtaining an aqueous copolymer solution.

<Comparative Example 3>

After a thermometer, an agitator, a reflux condenser, and a dropping funnel were installed in a glass reactor, 43.37 g of a metharyl (poly)alkylene glycol ether compound, and 25.48 g of ion-exchange water were added thereto, and the resulting mixture was heated to 60°C. Thereafter, 3.0 g of an aqueous solution of 2% hydrogen peroxide was added to a reaction vessel. Then, 1.92 g of acrylic acid was added dropwise for 1.5 hours. When the dropwise addition was completed, 4.08 g of acrylic acid was again added dropwise for 1.5 hours. An aqueous solution including 0.14 g of 3-mercaptopropionic acid, 0.08 g of L-ascorbic acid, and 15.94 g of ion-exchange water was added dropwise for 3.5 hours while the acrylic acid was primarily added dropwise. When the dropwise addition was completed, the reaction product was kept at 60°C for an hour, and then cooled. Then, a polymerization reaction was completed. Subsequently, the reaction product was adjusted with an aqueous NaOH solution to have a pH value of 7, thereby obtaining an aqueous copolymer solution.

<Examples 7 to 12>

Examples 7 to 12 were carried out using the monomers synthesized in Examples 1 to 3 by adjusting the ratios of the monomers synthesized in Examples 4 to 6. The results of the copolymers thus prepared are listed in Table 1 below.

[Table 1]

| Items | Monomer acronym | Monomer | Molar ratio of monomers | Results | | |
|---|---|---|---|---|---|---|
| | | | | Viscosity (cps at 25°C) | Specific gravity | pH |
| Example 4 | SuH-100 | AA | 4:1 | 420 | 1.102 | 1.89 |
| Example 5 | SuH-50 | AA | 4:1 | 432 | 1.1 | 2.18 |
| Example 6 | SuH-20 | AA | 4:1 | 450 | 1.098 | 2.4 |
| Example 7 | PhH-100 | AA | 4:1 | 340 | 1.102 | 1.88 |
| Example 8 | PhH-50 | AA | 4:1 | 370 | 1.1 | 2.14 |
| Example 9 | PhH-20 | AA | 4:1 | 405 | 1.102 | 2.42 |
| Example 10 | MalH-100 | AA | 4:1 | 960 | 1.102 | 1.7 |
| Example 11 | MalH-50 | AA | 4:1 | 1,096 | 1.104 | 1.8 |
| Example 12 | MalH-20 | AA | 4:1 | 1,382 | 1.096 | 1.96 |
| [Compound acronym] AA: acrylic acid | | | | | | |

[SuH-100 means that an SuH monomer is used alone, and each of the numerals 50 and 20 represents a ratio of SuH. A metharyl (poly)alkylene glycol ether monomer is used so that the other ratio reaches a total of 100%. PhH and MalH are also used for polymerization at the same ratios as in the method.

<Examples 13 to 16>

Polymerizations were performed in the same manner as in Example 4, except that the monomers synthesized in Examples 1 to 3 were used at a fixed ratio, and the different types and ratios of the other monomers were used. The polymer compositions thus prepared are listed in Table 2 below.

[Table 2]

| Items | Monomer acronym | Monomer | Molar ratio of monomers | Results | | | |
|---|---|---|---|---|---|---|---|
| | | | | Active ingredient (%) | Viscosity (cps at 25°C) | Specific gravity | pH |
| Example 13 | SuH-100 | AA, MAA | 3.5:0.5 | 50.5 | 340 | 1.104 | 1.98 |
| Example 14 | SuH-100 | AA, HEA | 3.5:0.5 | 50.5 | 370 | 1.102 | 1.99 |
| Example 15 | PhH-100 | AA, MA | 3.5:0.5 | 50.5 | 210 | 1.104 | 1.8 |
| Example 16 | PhH-100 | AA, MAA | 3.5:0.5 | 50.5 | 230 | 1.096 | 1.96 |
| Comparative Example 1 | VPEG | AA, MA | 1.99:1.43 | 50.5 | 172 | 1.106 | 6.58 |
| Comparative Example 2 | VPEG | MA, HEA | 1.44:0.58 | 50.5 | 117 | 1.112 | 6.75 |
| Comparative Example 3 | VPEG | AA | 3.5:0.5 | 50.5 | 470 | 1.102 | 3.51 |
| [Compound acronyms] AA: acrylic acid, MAA: methacrylic acid, MA: maleic acid, and HEA: 2-hydroxyethylacrylate | | | | | | | |

[Measurement of weight average molecular weights]

The weight average molecular weights of the samples polymerized in Examples 4 to 16 and Comparative Examples 1 to 3 were measured. The results are listed in Table 3 below.

[Table 3]

| Items | Molecular weight | Items | Molecular weight | Items | Molecular weight |
|---|---|---|---|---|---|
| Example 4 | 35,126 | Example 10 | 332,122 | Example 16 | 35,378 |
| Example 5 | 38,193 | Example 11 | 249,745 | Comparative Example 1 | 29,821 |
| Example 6 | 41,856 | Example 12 | 153,407 | Comparative Example 2 | 28,989 |
| Example 7 | 23,240 | Example 13 | 34,124 | Comparative Example 3 | 35,216 |
| Example 8 | 26,713 | Example 14 | 37,046 | | |
| Example 9 | 33,802 | Example 15 | 33,907 | | |

The conditions used to measure the weight average molecular weight of the copolymer are as follows.

1) Equipment: Gel permeation chromatograph (GPC) commercially available from WATERS Corp.
2) Detector: differential spectrometry refractive index (RI) detector (Ditector 2414 commercially available from WATERS Corp.)
3) Eluent: Type: deionized water (for HPLC), Flow rate: 0.8 ml/min
4) Type of column: Ultrahydrogel (6×40 mm) commercially available from WATERS Corp.
5) Column temperature: 25°C
6) Standard sample: Used after a calibration curve was plotted against polyethylene glycols having a peak-top molecular weight (Mp) of 1670, 5000, 25300, 440000, 78300,152000, 326000, and 55800.

[Preparation of concrete admixture]

Concrete admixtures were prepared using the aqueous copolymer solution prepared in Examples 4 to 16 and Comparative Examples 1 to 3.

1) An active ingredient of each of the aqueous copolymer solution prepared in Examples 4 to 16 and Comparative Examples 1 to 3 is measured.
2) The active ingredient of each of the aqueous copolymer solutions is adjusted to be 20%, and another admixture is added at a content of approximately 0.1% of the total weight of the aqueous copolymer solution (In this case, when there is no admixture to be added, it is possible to express performance using only the aqueous copolymer solution).

[Method for measuring active ingredient]

1) The mass of a polymer to be measured is measured.
2) The measured polymer is put into a dryer whose temperature is set to 105°C, and dried for 3 hours.
3) After the elapse of 3 hours, the polymer sample is taken out from the dryer, and then cooled at room temperature for 20 minutes in a desicator.
4) When Step 3) is ended, the mass of the polymer sample is measured.
5) Steps 1) to 4) are performed three times to prepare three test samples.
6) The active ingredient is calculated according to the following equation.

$$\text{Active ingredient (\%)} = \frac{\text{Weight (g) of polymer sample after drying}}{\text{Weight (g) of polymer sample before drying}} \times 100$$

7) An average of the measured masses of the test samples is determined as a ratio of the active ingredient of the polymer.

Based on the above-described method, the admixtures of the present invention was subjected to a concrete

test, and then compared and analyzed.

[Concrete test]

1) Slump test: KS F 2402
2) Measurement of air volume: KS F 2409
3) A concrete formulation is prepared using the following compositions.

- Water: 165 kg
- Cement (General Portland cement): 423 kg
- Fly ash: 47 kg
- Aggregate I (Type: fine aggregate): 760 kg
- Aggregate II (Type: 25 mm crushed stone): 946 kg

4) Experimental method:

A concrete mixture prepared from the above-described components was thoroughly mixed, and the following test methods were performed to measure an initial flow value, a flow value after 60 minutes, and a volume of air.

[Slump test (KS F 2402)]

1) The inside of a slump cone is wiped with a damp cloth, and the slump cone is placed on a watertight flat plate.
2) A sample is added at approximately 1/3 (Depth: approximately 7 cm) of the volume of a slump cone, and the entire surface of the sample is uniformly tamped 25 times using a tamping bar.
3) A sample is added at 2/3 (Depth: approximately 16 cm) of the volume of the slump cone, and tamped 25 times using the tamping bar. In this case, the depth of concrete into which the tamping bar is stuck is approximately 9 cm.
4) Finally, a sample is added to the slump cone to such a level that the sample brims over, and tamped 25 times using the tamping bar.
5) The surface of the sample is flattened to a top surface of the slump cone.
6) The slump cone is carefully pulled out upward.
7) The depth of the sunken concrete is measured with an accuracy of 5 mm.

[Air test (KS F 2409)]

1) A vessel is divided into three layers having substantially the same height, and completely filled with a sample. Then, each of the layers is uniformly tamped ten times, and a side of the vessel is struck with a wooden hammer five times.
2) Next, the sample is flattened with the remaining sample using a ruler. An upper flange portion of the vessel, and a lower flange portion of a cap are wiped cleanly, and the cap is carefully attached to the vessel to circulate air through the cap. Then, the cap is tightened to prevent air from escaping from the vessel, and an air pressure in the vessel is matched with an initial pressure.
3) After approximately 5 seconds, an actuator disk is fully opened. A side of the vessel is struck with a wooden hammer so that a pressure is uniformly applied to respective portions of concrete. The actuator disk is fully opened again, and an air volume scale of a pressure gauge is read to one decimal place until a needle is stabilized.

[Compressive strength test]

This test was carried out based on the above-described concrete mixture, and a test piece specimen for a compressive strength test was manufactured, as follows.
1) The number of test piece specimens is set to 3.
2) A mineral oil is applied to a mold before concrete is poured into the mold.
3) To fill the mold with concrete, the mold is divided into three layers, and filled with the concrete using a tamping bar.

Then, each of the layers is tamped 25 times.
4) The mold is removed 24 to 48 hours after the concrete is poured into the mold. Thereafter, the concrete is aged at a temperature of 18 to 24°C under a wet condition until a compressive strength test is carried out.

[Table 4]

| Admixture contents, flow values over time, air volumes, and changes in compressive strength | | | | | | | | |
|---|---|---|---|---|---|---|---|---|
| Items | Content (%) | Flow (mm) | | Air (%) | Concrete condition | Compressive strength ($kgf/cm^2$) | | |
| | | Initial | 60 min | | | Day 3 | Day 7 | Day 28 |
| Example 4 | 1.0 | 590×60 0 | 540×55 0 | 3.5 | ◎ | 321 | 402 | 438 |
| Example 5 | 1.0 | 600×60 | 560×57 | 3.5 | ◎ | 325 | 410 | 440 |
| | | 0 | 0 | | | | | |
| Example 6 | 1.0 | 580×58 0 | 520×51 0 | 3.4 | ◎ | 316 | 391 | 433 |
| Example 7 | 1.0 | 570×57 0 | 490×50 0 | 2.8 | ○ | 295 | 367 | 427 |
| Example 8 | 1.0 | 580×58 0 | 530×55 0 | 2.8 | ○ | 300 | 380 | 415 |
| Example 9 | 1.0 | 590×60 0 | 540×55 0 | 2.7 | ◎ | 322 | 404 | 440 |
| Example 10 | 1.0 | 440×45 0 | 320×32 0 | 3.1 | ◊ | 318 | 398 | 429 |
| Example 11 | 1.0 | 420×43 0 | 330×33 0 | 3.1 | ◊ | 318 | 397 | 429 |
| Example 12 | 1.0 | 460×47 0 | 370×37 0 | 3.2 | ○ | 318 | 396 | 428 |
| Example 13 | 1.0 | 580×58 0 | 530×55 0 | 2.9 | ◎ | 310 | 410 | 430 |
| Example 14 | 1.0 | 560×56 0 | 540×55 0 | 2.9 | ◎ | 314 | 409.5 | 431 |
| Example 15 | 1.0 | 570×56 0 | 500×50 0 | 3.2 | ○ | 319 | 403 | 432 |
| Example 16 | 1.0 | 550×56 0 | 440×45 0 | 3.4 | ○ | 320 | 401 | 440 |
| Comparative Example 1 | 1.0 | 390×40 0 | 180×19 0 | 2.8 | ◊ | 285.5 | 307 | 357 |
| Comparative Example 2 | 1.0 | 300×31 0 | 120×13 0 | 2.6 | × | 275 | 316 | 367 |
| Comparative Example 3 | 1.0 | 530×54 0 | 460×47 0 | 2.8 | ○ | 317 | 390 | 411 |

※ In the Table, the concrete conditions are expressed as feelings when the concrete is mixed using a scoop. The concrete conditions are expressed according to the goodness of light and soft feelings, as follows: Very good:
◎, Good:
○, Mean:
◊, and Poor: ×.

[Mixing time test]

This test was carried out for 30, 60, and 90 seconds, considering that concrete was generally mixed for a mixing time of 40 to 60 seconds in a ready-mixed concrete (remicon) factory. In this case, the mixing of the concrete, and the measurement of an initial flow value were carried out according to the above-described test method. It was revealed that, when the admixture prepared in each of Examples 4 and 9 was added, the condition of concrete was very good even when the concrete was mixed for a mixing time of 30 seconds, and thus the concrete mixing time was able to be shortened by 20% or more.

[Table 5]

| Flow values over time according to mixing time | | | | | |
|---|---|---|---|---|---|
| Items | Mixing time (sec.) | Content (%) | Flow (mm) | Air (%) | Concrete condition |
| | | | Initial | | |
| Example 4 | 30 | 1.0 | 630×620 | 3.5 | ◎ |
| | 60 | 1.0 | 590×600 | 3.4 | ◎ |
| | 90 | 1.0 | 570×580 | 3.6 | ◎ |
| Example 9 | 30 | 1.0 | 620×620 | 2.7 | ◎ |
| | 60 | 1.0 | 590×600 | 2.7 | ◎ |
| | 90 | 1.0 | 570×580 | 2.7 | ◎ |
| Example 11 | 30 | 1.0 | 450×460 | 3.3 | ◊ |
| | 60 | 1.0 | 420×430 | 3.1 | ◊ |
| | 90 | 1.0 | 410×420 | 3.1 | ◊ |
| Example 15 | 30 | 1.0 | 570×570 | 3.4 | ○ |
| | 60 | 1.0 | 560×570 | 3.2 | ○ |
| | 90 | 1.0 | 530×550 | 3.3 | ○ |
| Comparative Example 1 | 30 | 1.0 | 330×340 | 2.9 | ◊ |
| | 60 | 1.0 | 390×410 | 2.8 | ◊ |
| | 90 | 1.0 | 300×310 | 2.8 | ◊ |
| ※ In the Table, the conditions of concrete are expressed as feelings when the concrete is mixed using a scoop. The concrete conditions are expressed according to the goodness of light and soft feelings, as follows: Very good: ◎, Good: o, Mean: ◊, and Poor: ×. | | | | | |

## Claims

1. A cement dispersant which is a polymer composition represented by Formula (f), wherein the polymer composition comprises a copolymer including a compound represented by Formula (a) and a compound represented by at least one of Formulas (d) and (e), and the compound of Formula (a) is formed by a ring-opening reaction of an acid anhydride represented by Formula (c) with a metharyl (poly)alkylene glycol ether compound represented by Formula (b), and is able to be used alone or in combination with the compound of Formula (b):

Formula (a)

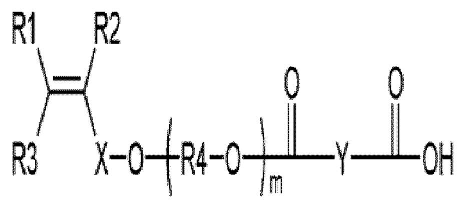

wherein each of R1 to R3 represents a hydrogen atom, or at least one alkyl group having 1 to 30 carbon atoms, R4 represents an alkyl group having 1 to 30 carbon atoms, X represents an alkyl group having 0 to 30 carbon atoms, Y represents an alkyl group having 1 to 30 carbon atoms, and m represents the average number of moles of added oxyalkylene and alkyl groups and is a number ranging from 1 to 400;

Formula (b)

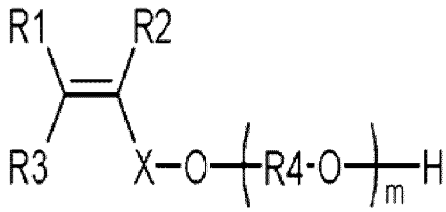

wherein each of R1 to R3 represents a hydrogen atom, or at least one alkyl group having 1 to 30 carbon atoms, R4 represents an alkyl group having 1 to 30 carbon atoms, X represents an alkyl group having 0 to 30 carbon atoms, and m represents the average number of moles of added oxyalkylene and alkyl groups and is a number ranging from 1 to 400;

Formula (c)

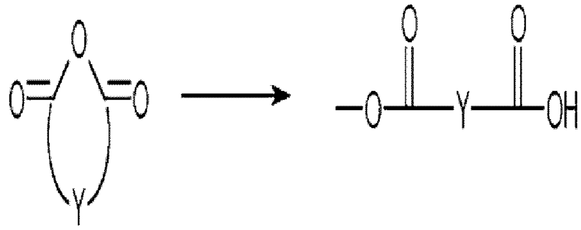

wherein Y represents a material, such as an alkene, a phenyl, an alkyl, an aryl, an aliphatic cyclic compound, or an aromatic compound, which has 1 to 30 carbon atoms;

Formula (d)

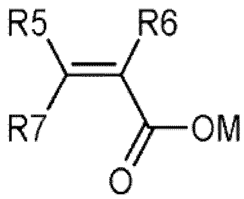

wherein each of R5 to R7 represents a hydrogen atom, or an alkyl, alkylene, allyl or acid, all of which have 1 to 30 carbon atoms, and M represents a hydrogen atom, or a compound such as a monovalent or divalent metal and ammonia, and a primary, secondary or tertiary amine;

Formula (e)

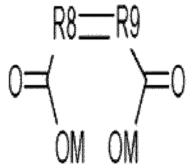

wherein each of R8 to R9 represents an alkyl group having 1 to 30 carbon atoms, and M represents a hydrogen atom, or a compound such as a monovalent or divalent metal and ammonia, and a primary, secondary or tertiary amine; and

Formula (f)

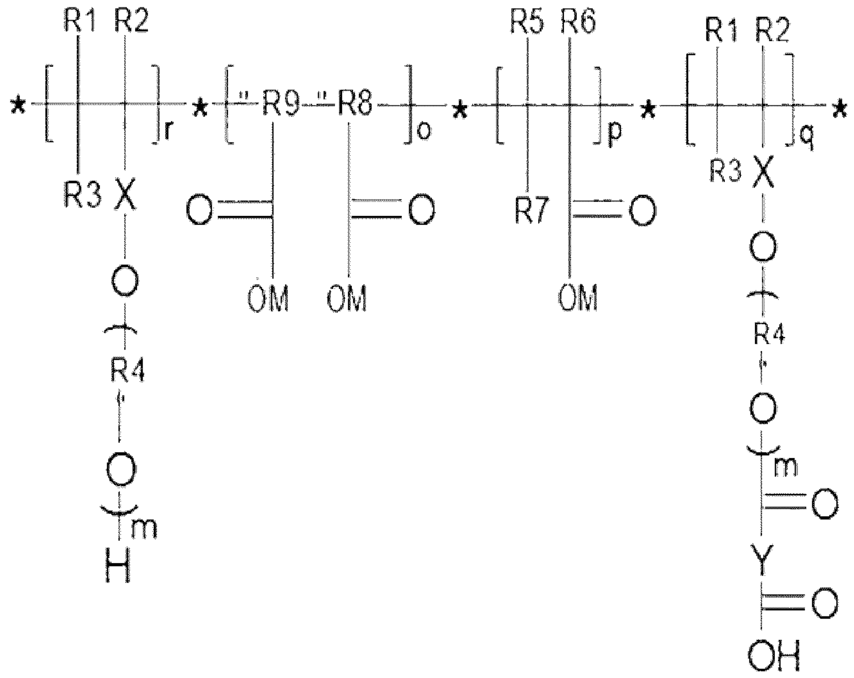

wherein each of R1 to R3 and R5 to R7 represents a hydrogen atom, or an alkyl group having 1 to 30 carbon atoms, each of R4 and R8 to R9 represents an alkyl group having 1 to 30 carbon atoms, X represents an alkyl group having 0 to 30 carbon atoms, each of m, o, p, q and r represents the average number of moles, provided that m is in a range of 1 to 400 moles, o, p and r are in a range of 0 to 400 moles, and q is in a range of 0.1 to 400 moles, and M represents a hydrogen atom, a compound such as a monovalent or divalent metal and ammonia, and a primary, secondary or tertiary amine.

2. The cement dispersant of claim 1, wherein the average number of moles of the oxyalkylene and alkyl groups in the compound of Formula (a) is in a range of 1 to 400.

3. The cement dispersant of claim 1, wherein the polymer composition represented by Formula (f) has a weight average molecular weight of 10,000 to 300,000.

4. The cement dispersant of claim 1, wherein the mixing ratios of the compounds of Formulas (a), (b), (d) and (e) are based on the molar ratios, the sum of the molar ratios of the compounds of Formulas (a) and (b) is less than or equal to the sum of the molar ratios of the compounds of Formulas (d) and (e), the polymer composition of Formula (f) essentially comprises the compound of Formula (a), and is able to be used in combination with the compound of Formula (b), at least one of the compounds of Formulas (d) and (e) is able to be used, and at least one of the compounds of Formulas (d) and (e) has to be used.

5. The cement dispersant of claim 1, wherein the compounds of Formulas (a), (b), (d), and (e) are polymerized at a molar ratio of 10 to 100 : 0 to 70 : 0 to 150 : 0 to 150.

6. A mortar·concrete admixture comprising the cement dispersant represented by Formula (f) defined in any one of claims 1 to 5.

7. A method for preparing a cement dispersant which is a polymer composition represented by Formula (f), wherein the polymer composition comprises a copolymer including a compound represented by Formula (a) and a compound represented by at least one of Formulas (d) and (e), and
the compound of Formula (a) is formed by a ring-opening reaction of an acid anhydride represented by Formula (c) with a metharyl (poly)alkylene glycol ether compound represented by Formula (b), and is able to be used alone or in combination with the compound of Formula (b):

Formula (a)

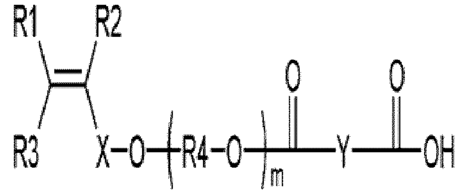

wherein each of R1 to R3 represents a hydrogen atom, or at least one alkyl group having 1 to 30 carbon atoms, R4 represents an alkyl group having 1 to 30 carbon atoms, X represents an alkyl group having 0 to 30 carbon atoms, Y represents an alkyl group having 1 to 30 carbon atoms, and m represents the average number of moles of added oxyalkylene and alkyl groups and is a number ranging from 1 to 400;

Formula (b)

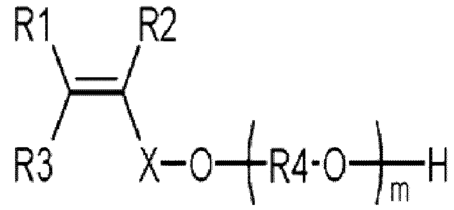

wherein each of R1 to R3 represents a hydrogen atom, or at least one alkyl group having 1 to 30 carbon atoms, R4 represents an alkyl group having 1 to 30 carbon atoms, X represents an alkyl group having 0 to 30 carbon atoms, and m represents the average number of moles of added oxyalkylene and alkyl groups and is a number ranging from 1 to 400;

Formula (c)

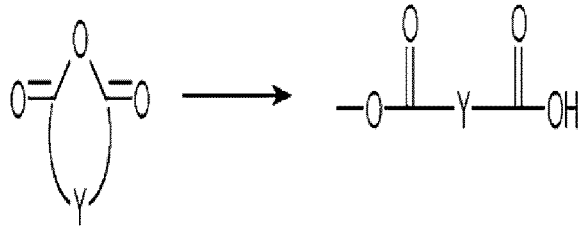

wherein Y represents a material, such as an alkene, a phenyl, an alkyl, an aryl, an aliphatic cyclic compound, or an aromatic compound, which has 1 to 30 carbon atoms;

Formula (d)

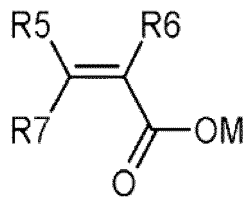

wherein each of R5 to R7 represents a hydrogen atom, or an alkyl, alkylene, allyl or acid, all of which have 1 to 30 carbon atoms, and M represents a hydrogen atom, or a compound such as a monovalent or divalent metal and

ammonia, and a primary, secondary or tertiary amine;

Formula (e)

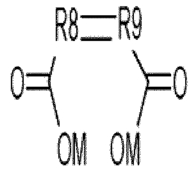

wherein each of R8 to R9 represents an alkyl group having 1 to 30 carbon atoms, and M represents a hydrogen atom, or a compound such as a monovalent or divalent metal and ammonia, and a primary, secondary or tertiary amine; and

Formula (f)

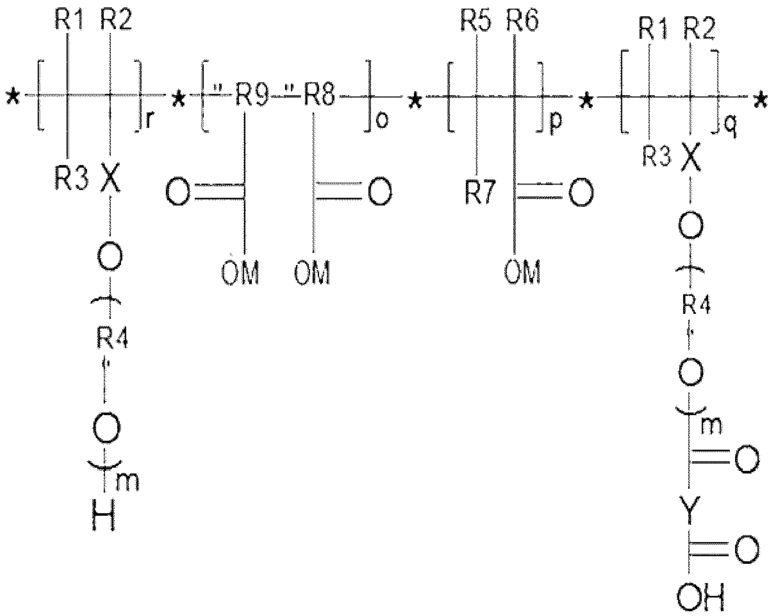

wherein each of R1 to R3 and R5 to R7 represents a hydrogen atom, or an alkyl group having 1 to 30 carbon atoms, each of R4 and R8 to R9 represents an alkyl group having 1 to 30 carbon atoms, X represents an alkyl group having 0 to 30 carbon atoms, each of m, o, p, q and r represents the average number of moles, provided that m is in a range of 1 to 400 moles, o, p and r are in a range of 0 to 400 moles, and q is in a range of 0.1 to 400 moles, and M represents a hydrogen atom, a compound such as a monovalent or divalent metal and ammonia, and a primary, secondary or tertiary amine.

**8.** The method of claim 7, wherein the average number of moles of the oxyalkylene and alkyl groups in the compound of Formula (a) is in a range of 1 to 400.

**9.** The method of claim 7, wherein the polymer composition represented by Formula (f) has a weight average molecular weight of 10,000 to 300,000.

**10.** The method of claim 7, wherein the mixing ratios of the compounds of Formulas (a), (b), (d) and (e) are based on the molar ratios, the sum of the molar ratios of the compounds of Formulas (a) and (b) is less than or equal to the sum of the molar ratios of the compounds of Formulas (d) and (e), the polymer composition of Formula (f) essentially comprises the compound of Formula (a), and is able to be used in combination with the compound of Formula (b),

at least one of the compounds of Formulas (d) and (e) is able to be used, and at least one of the compounds of Formulas (d) and (e) has to be used.

**11.** The method of claim 7, wherein the compounds of Formulas (a), (b), (d), and (e) are polymerized at a molar ratio of 10 to 100 : 0 to 70 : 0 to 150 : 0 to 150.

INTERNATIONAL SEARCH REPORT

International application No.
**PCT/KR2015/001525**

A. CLASSIFICATION OF SUBJECT MATTER

***C04B 24/24(2006.01)i***

According to International Patent Classification (IPC) or to both national classification and IPC

B. FIELDS SEARCHED

Minimum documentation searched (classification system followed by classification symbols)

C04B 24/24; C04B 28/04; C04B 28/12; B32B 1/04; C04B 28/14; C04B 24/00; C04B 24/26; C04B 24/26; C04B 28/02; C04B 24/04; C08F 220/00; C08F 220/10; C04B 24/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: cement, mortar, acrylate, alkylen glycol ether, copolymerization, dispersant, admixture

C. DOCUMENTS CONSIDERED TO BE RELEVANT

| Category* | Citation of document, with indication, where appropriate, of the relevant passages | Relevant to claim No. |
|---|---|---|
| A | US 2012-0172468 A1 (BLACKBURN, David R. et al.) 05 July 2012<br>See abstract, claims 1 to 19. | 1-11 |
| A | US 2006-0280899 A1 (LUI, Qingxia et al.) 14 December 2006<br>See abstract, claims 1 to 23. | 1-11 |
| A | KR 10-2006-0109445 A (NIPPON SHOKUBAI CO., LTD) 20 October 2006<br>See abstract, claims 1 to 8. | 1-11 |
| A | KR 10-2005-0103976 A (NIPPON SHOKUBAI CO., LTD) 01 November 2005<br>See abstract, claims 1 to 7. | 1-11 |
| A | KR 10-2005-0102832 A (SAN NOPCO KOREA LTD) 27 October 2005<br>See abstract, claims 1 to 4. | 1-11 |
| A | KR 10-2007-0028310 A (CONSTRUCTION RESEARCH & TECHNOLOGY GMBH) 12 March 2007<br>See abstract, claims 1 to 19. | 1-11 |
| A | KR 10-2004-0009221 A (SAN NOPCO KOREA LTD) 31 January 2004<br>See abstract, claims 1 to 5. | 1-11 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 MAY 2015 (19.05.2015) | **20 MAY 2015 (20.05.2015)** |

| Name and mailing address of the ISA/**KR** | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.
PCT/KR2015/001525

| Patent document cited in search report | Publication date | Patent family member | Publication date |
|---|---|---|---|
| US 2012-0172468 A1 | 05/07/2012 | AR 084738 A1 | 05/06/2013 |
| | | CA 2823006 A1 | 05/07/2012 |
| | | WO 2012-091914 A1 | 05/07/2012 |
| US 2006-0280899 A1 | 14/12/2006 | AU 2006-259581 A1 | 28/12/2006 |
| | | AU 2006-259581 B2 | 11/08/2011 |
| | | BR PI0612107A2 | 19/10/2010 |
| | | CA 2609584 A1 | 28/12/2006 |
| | | CN 101193833 A | 04/06/2008 |
| | | EP 1890980 A2 | 27/02/2008 |
| | | IL 187212D0 | 09/02/2008 |
| | | JP 2008-543616 A | 04/12/2008 |
| | | KR 10-2008-0034128 A | 18/04/2008 |
| | | MX 2007015966 A | 06/03/2008 |
| | | NZ 563199 A | 28/01/2011 |
| | | RU 2008101409 A | 20/07/2009 |
| | | RU 2417963 C2 | 10/05/2011 |
| | | UA 93876C2 | 25/03/2011 |
| | | US 2006-0278135 A1 | 14/12/2006 |
| | | US 7572329 B2 | 11/08/2009 |
| | | WO 2006-138001 A2 | 28/12/2006 |
| | | WO 2006-138001 A3 | 09/04/2009 |
| | | WO 2006-138273 A2 | 28/12/2006 |
| | | WO 2006-138273 A3 | 27/09/2007 |
| | | ZA 200710226 A | 29/10/2008 |
| KR 10-2006-0109445 A | 20/10/2006 | CN 100450958 C | 14/01/2009 |
| | | CN 1871184 A | 29/11/2006 |
| | | EP 1680377 A1 | 19/07/2006 |
| | | JP 04666344 B2 | 06/04/2011 |
| | | JP 05349402 B2 | 20/11/2013 |
| | | JP 2006-036623 A | 09/02/2006 |
| | | JP 2010-202512 A | 16/09/2010 |
| | | US 2007-0142505 A1 | 21/06/2007 |
| | | US 8058328 B2 | 15/11/2011 |
| | | WO 2005-044752 A1 | 19/05/2005 |
| KR 10-2005-0103976 A | 01/11/2005 | CN 100542989 C | 23/09/2009 |
| | | CN 1756724 A | 05/04/2006 |
| | | CN 1756724 C | 05/04/2006 |
| | | EP 1601627 A1 | 07/12/2005 |
| | | EP 1601627 B1 | 17/10/2012 |
| | | JP 04531044 B2 | 25/08/2010 |
| | | JP 2006-521997 A | 28/09/2006 |
| | | TW 200420519 A | 16/10/2004 |
| | | TW I308559 A | 11/04/2009 |
| | | TW I308559 B | 11/04/2009 |
| | | US 2004-0198871 A1 | 07/10/2004 |
| | | US 7304104 B2 | 04/12/2007 |

Form PCT/ISA/210 (patent family annex) (July 2009)

INTERNATIONAL SEARCH REPORT
Information on patent family members

International application No.
PCT/KR2015/001525

| Patent document cited in search report | Publication date | Patent family member | Publication date |
|---|---|---|---|
| | | WO 2004-078672 A1 | 16/09/2004 |
| KR 10-2005-0102832 A | 27/10/2005 | KR 10-0655561 B1 | 08/12/2006 |
| KR 10-2007-0028310 A | 12/03/2007 | AU 2005-209997 A1 | 18/08/2005 |
| | | AU 2005-209997 B2 | 16/09/2010 |
| | | CA 2554763 A1 | 18/08/2005 |
| | | CA 2554763 C | 18/12/2012 |
| | | EP 1711544 A2 | 18/10/2006 |
| | | EP 1711544 B1 | 15/10/2008 |
| | | JP 04942032 B2 | 30/05/2012 |
| | | JP 2007-523235 A | 16/08/2007 |
| | | US 2007-0161724 A1 | 12/07/2007 |
| | | US 2011-0136944 A1 | 09/06/2011 |
| | | WO 2005-075529 A2 | 18/08/2005 |
| | | WO 2005-075529 A3 | 30/11/2006 |
| KR 10-2004-0009221 A | 31/01/2004 | KR 10-0524383 B1 | 01/11/2005 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 100924665
- KR 100760586
- KR 100855533